(19) Europäisches Patentamt
European Patent Office
Office européen des brevets

(11) EP 3 070 588 A1

(12) EUROPEAN PATENT APPLICATION

(43) Date of publication:
21.09.2016 Bulletin 2016/38

(51) Int Cl.:
G06F 3/0485 (2013.01)          G06F 1/16 (2006.01)
G06F 3/0362 (2013.01)

(21) Application number: 15305386.3

(22) Date of filing: 16.03.2015

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA

(71) Applicant: Thomson Licensing
92130 Issy-les-Moulineaux (FR)

(72) Inventors:
• Maetz, Yves
35576 Cesson-Sévigné (FR)
• Orlac, Izabela
35576 Cesson-Sévigné (FR)
• Schmouker, Philippe
35576 Cesson-Sévigné (FR)

(74) Representative: Huchet, Anne
Technicolor
1, rue Jeanne d'Arc
92443 Issy-les-Moulineaux Cedex (FR)

(54) A METHOD FOR OPERATING AN ELECTRONIC DEVICE HAVING A WRAPAROUND DISPLAY, CORRESPONDING ELECTRONIC DEVICE AND NON-TRANSITORY PROGRAM STORAGE DEVICE

(57) A method for operating an electronic device having a wraparound display, the method comprising receiving a first signal indicating a first rotational direction; rotating a list of items displayed on the wraparound display with respect to the wraparound display in the indicated first rotational direction at a first speed responsive to the first signal; receiving a second signal after the first signal, the second signal indicating a second rotational direction; and increasing the first speed if the second rotational direction is same as the first rotational direction and decreasing the first speed, if the second rotational direction is different from the first rotational direction.

FIG. 1

## Description

Field of the Invention

The present disclosure generally relates to operating an electronic device with a wraparound display, more particularly to changing shifting/rotating speed of displaying context in the wraparound display with respect to wraparound display and changing display appearance according to the distance to a center of viewing angle on the wraparound display.

Background of the Invention

An electronic device with wraparound display is disclosed in International Publication Number WO 2013/188111 A2, incorporated herein by reference. However, for a handheld electronic device with wraparound display, a better user interface should be provided.

Summary of the Invention

In accordance with an aspect of the present invention, a method for operating an electronic device having a wraparound display is disclosed. The method comprises receiving a first signal indicating a first rotational direction; rotating a list of items displayed on the wraparound display with respect to the wraparound display in the indicated first rotational direction at a first speed responsive to the first signal; receiving a second signal after the first signal, the second signal indicating a second rotational direction; and increasing the first speed if the second rotational direction is same as the first rotational direction and decreasing the first speed, if the second rotational direction is different from the first rotational direction.

In accordance with another aspect of the present invention, an electronic device is disclosed. The electronic device comprises storage means for storing programs and data; a wraparound display; and processing means configured to receive a first signal indicating a first rotational direction, wherein the processing means is configured to rotate a list of items displayed on the wraparound display with respect to the wraparound display in the indicated first rotational direction with a first speed responsive to the first signal; receive a second user signal after the first signal, the second signal indicating a second rotational direction; and increase the first speed if the second rotational direction is same as the first rotational direction and decrease the first speed, if the second rotational direction is different from the first rotational direction.

In one embodiment, a first one of the items is displayed with a first font size or a first intensity and a second one of the items is displayed with a second font size or a second intensity according to a distance in the wraparound display to the first one of the items.

In another embodiment, the increased first speed is a predetermined speed plus a first amount and decreased first speed is the predetermined speed minus a second amount.

In another embodiment, the processing means (2) is configured to receive at least one more signal after the second signal, the at least one more signal indicating a rotational direction different from the first rotational direction; and further decrease the first speed according a number of the at least one more signal has been received, wherein the further decreased first speed is negative and the method further comprises receiving at least one more signal after the second signal, the at least one more signal indicating a rotational direction different from the first rotational direction; and further decreasing the first speed according a number of the at least one more signal received, wherein the further decreased first speed is negative.

In another embodiment, the processing means is configured to receive a user selection signal and in response to the user selection signal, stop displaying items that have a distance to the first one of the items over 45 degrees and the method further comprises receiving a user selection signal and in response to the user selection signal, stopping displaying items that have a distance to the first one of the items over 45 degrees.

In another embodiment, the processing means is configured to receive a fourth user signal and responsive to the fourth user signal, stop the rotating of the list of items and the method further comprises receiving a fourth user signal and responsive to the fourth user signal, stop the rotating of the list of items.

In another embodiment, the processing means is configured to select the item at a particular location for execution when the shifting rotating is stopped and the method further comprises selecting the item at a particular location for execution when the shifting rotating is stopped.

In accordance with another aspect of the present invention, a non-transitory program storage device readable by machine is disclosed. The non-transitory program storage, tangibly embodies a program of instructions executable by the machine to perform program steps of one of the method claims.

The aforementioned brief summary of exemplary embodiments of the present invention is merely illustrative of the inventive concepts presented herein, and is not intended to limit the scope of the present invention in any manner.

Description of the Drawings

These, and other aspects, features and advantages of the present disclosure will be described or become apparent from the following detailed description of the preferred embodiments, which is to be read in connection with the accompanying drawings.

In the drawings, wherein like reference numerals denote similar elements throughout the views:

FIG. 1 is an illustrative electronic device with a wraparound display in accordance with an embodiment of the present disclosure;

FIG. 2 is a schematic diagram showing illustrative circuitry that may be included in device 10 shown in FIG. 1 in accordance with an embodiment of the present disclosure;

FIG. 3 is a diagram of illustrative software that may be implemented on the processing circuitry of the type shown in FIG. 2 in accordance with an embodiment of the present disclosure;

FIG. 4 is a perspective view of display 12 in the process of displaying content 118 for a user of the electronic device 10;

FIG. 5 is a side view of the electronic device 10 showing how the wraparound display 12 may be viewed in direction 122 by a user at viewer position 120 while rotating the electronic device 10 and the wraparound display 12 in direction 126;

FIG. 6 shows the view of the electronic device 10 in FIG. 1 rotated 45 degrees clockwise viewing from the end surface 28;

FIG. 7 shows an example of receiving two lists of items respectively from two playing devices, an MP3 player and a television;

FIG. 8 shows an example of the XML content for the list 710 shown in FIG. 7 received by the electronic device 10; and

FIG. 9 shows an example of the JSon content for the list 720 shown in FIG. 7 received by the electronic device 10;

FIG. 10 shows an example of a list shifted clockwise in the wraparound display 12; and

FIG. 11 shows an exemplary process 1100 executed by the electronic device 10 in accordance with the principles of the embodiments of the invention.

Detailed Description

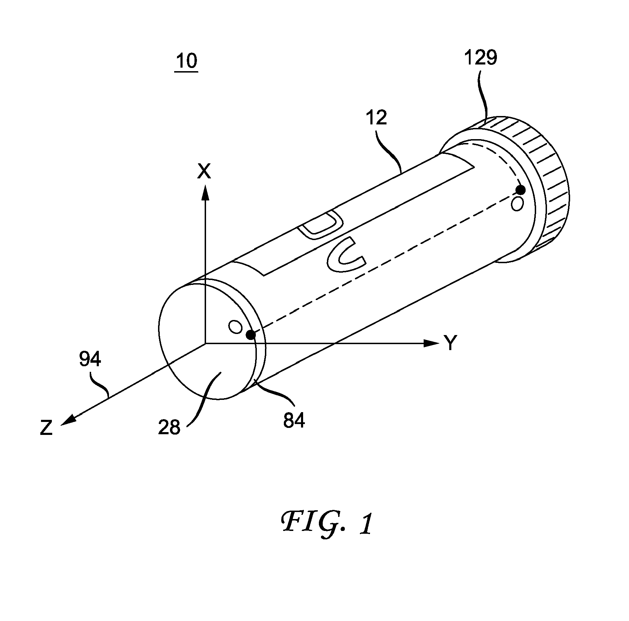

An illustrative electronic device with a wraparound display is shown in FIG. 1. As shown in FIG. 1, the electronic device 10 has a display means such as wraparound display 12 that is continuously wrapped around the body of the electronic device 10. Displays such as the wraparound display 12 may be formed using liquid crystal display (LCD) technology, a light-emitting display such as an organic light-emitting diode display, an electrophoretic display, an electrowetting display, a plasma display, or other suitable types of display technology. The wraparound display 12 may be a touch sensitive display. The line 0-0 on the display 12 shown in FIG. 1 indicates the beginning of the wraparound display 12 in this illustration. The line 0-0 is at the seam that connects the two ends of the wraparound display 12. In this example, display 12 completely wraps around the body of electronic device 10 with respect to the longitudinal axis, however, it is to be understood, that the present principles also apply to a device in which the display wraps around a portion of the body of a device with respect to the longitudinal axis.

In the example of FIG. 1, the housing of the electronic device 10 has an elongated shape with an oval cross-sectional shape. This is merely illustrative. Other types, such as a circular or a polygonal cross-sectional shape, of housings may be used for the electronic device 10 if desired. The electronic device 10 may optionally include an interface (not shown) on an end surface 28 of an end cap 84, such as an audio jack port (not shown) for an accessory such as a headset (not shown), which may include a speaker, a microphone, and/or a headset controller (all not shown).

The end cap 84 may be associated with plastic cap structures or other types of housing structures. The electronic device 10 may also have a similar end surface at the opposing end. Preferably, the end cap 129 at the opposing end has a shape like a wheel with threads on the wheel surface, so that a user can easily rotate the electronic device 10 with respect to Z axis, which is an imaginary line about which the electronic device 10 (and the wraparound display 12) rotates when the wheel is turned by a user. In this embodiment, when the wheel is turned, the electronic device 10 is also turned. For illustration purposes, we also define the X and Y axes as shown in FIG. 1 and call the Z or 94 axis as the longitudinal axis of the electronic device 10.

The electronic device 10 may optionally have input-output components such as buttons, status indicators, microphone ports, speaker ports, connector ports, sensors such as an ambient light sensor and proximity sensor, switches, and/or other electrical components (all not shown) that are mounted to one or both of the two end surfaces in addition to the audio jack port. One of the buttons may be designated as a selection button. When one of the displayed items on the wraparound display 12 is pointed to by a cursor or highlighted, pressing the selection button causes the electronic device 10 to select the item pointed to by the cursor or highlighted. Depending on the function of the item, the selection of the item causes the electronic device 10 to perform a particular function assigned to that item. For example, if the item is a submenu, the electronic device 10 displays the submenu responsive to the selection of the item. If the item is a file, the electronic device opens the selected item. For another example, if the item is a song/video, the electronic device 10 causes playing back the song/video by itself or another playing device connected to the electronic device 10 responsive to the selection.

Another button may be designated as a setting button. Pressing the setting button causes the electronic device 10 to display a setting menu for setting, for example, a center of the viewing angle and a shifting/rotating speed, which may be a predetermined shifting speed, of displayed items.

One input-output component may be designated as an adjusting knob for adjusting, for example, volume or shifting a cursor or highlight from one displayed item to another.

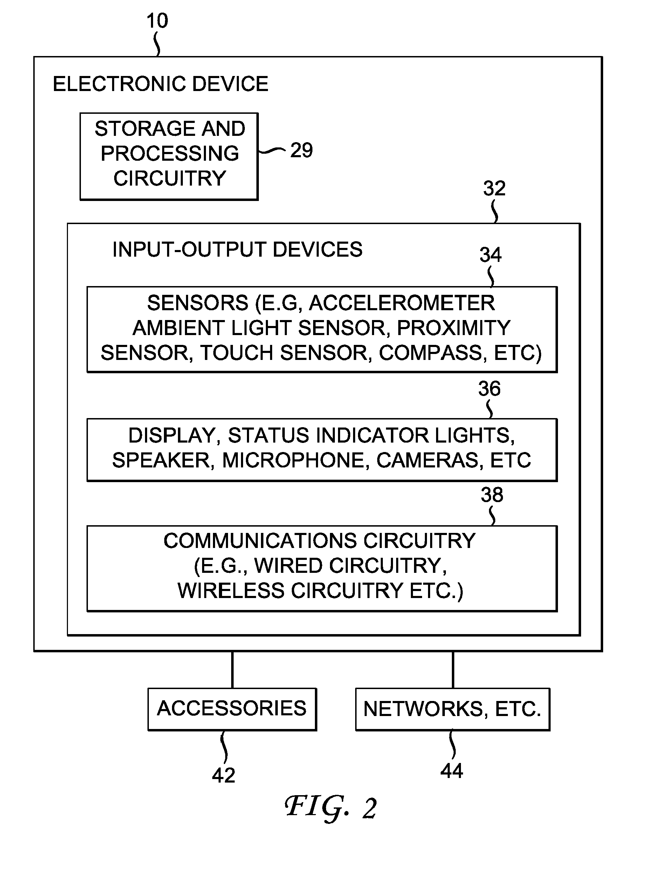

A schematic diagram showing illustrative circuitry that may be included in device 10 is shown in FIG. 2. As shown in FIG. 2, the electronic device 10 includes control circuitry such as storage and processing circuitry 29. The storage and processing circuitry 29 may include storage means such as hard disk drive storage, nonvolatile memory (e. g. , flash memory or other electrically-programmable-read-only memory configured to form a solid state drive), volatile memory (e.g., static or dynamic random-access-memory), etc., for storing programs and data. A portion of the storage is a non-transitory storage readable by the processing circuitry and is used to store a program of instructions executable by the processing circuitry to perform program steps as disclosed in this disclosure. Processing circuitry in the storage and processing circuitry 29 may be used to control the operation of the electronic device 10. The processing circuitry or means may be based on one or more microprocessors, microcontrollers, digital signal processors, baseband processors, power management units, audio codec chips, application specific integrated circuits, etc.

Input-output devices 32 may include sensors 34 such as ambient light sensors, touch sensors, accelerometers, gyroscope sensors, and proximity sensors, touch screen sensor arrays (e.g., capacitive touch sensors, touch sensors based on resistive touch sensor technology, acoustic touch technology, light-based touch technology, or other touch sensors), and other sensors. The electronic device 10 may use an accelerometer or a gyroscope (not shown) for detecting the rotational movement of the electronic device 10 with respect to Z axis.

Input-output devices may also include devices 36 such as audio input-output devices (e.g., microphones and speakers), device such as buttons, adjusting knobs, joysticks, click wheels, scrolling wheels, touch pads, key pads, keyboards, tone generators, vibrators, cameras, status indicators such as light-emitting diodes, etc. The devices 36 may also include one or more displays such as the wraparound display 12 of FIG. 1.

Communications circuitry 38 may include wired data port circuitry and wireless communications circuitry. The wireless communications circuitry may include radio frequency (RF) transceiver circuitry formed from one or more integrated circuits, power amplifier circuitry, low-noise input amplifiers, passive RF components, one or more antennas, and other circuitry for handling RF wireless signals. Wireless signals can also be sent using light (e.g., using infrared communications).

The electronic device 10 may interact with external equipment. For example, electronic device 10 may send data to external equipment 44 and may receive data from the external equipment 44. The external equipment 44 may include a wireless local area network that communicates wirelessly with device 10 using communications circuitry 38 in the electronic device 10, may be wired network equipment to which the electronic device 10 is attached with a cable, may be a peer device that is coupled to the electronic device 10 through a wired or wireless connection, or may be other equipment that sends and/or receives signals from the electronic device 10.

The electronic device 10 may also interact with equipment such as accessories 42 using a wired path and/or wireless path. For example, the accessories 42 may include a headset with an audio plug that is configured to mate with an audio jack in the electronic device 10. The accessories 42 may also include microphones, speakers, and other audio accessories, video accessories, televisions, computer monitors, charging stations, display equipment, embedded system equipment such as equipment in an automobile, and other external electronic equipment. Analog and/or digital communications may be used in communicating between the electronic device 10 and the accessories 42.

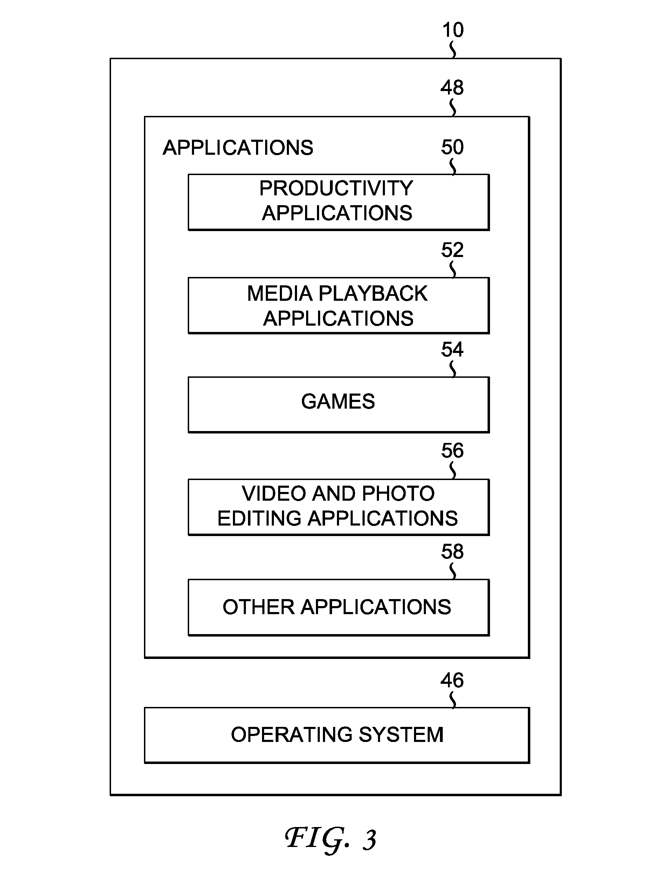

The electronic device 10 may use software for implementing functions that display information on display 12 and other device functions. The software may be executed by the control circuitry such as storage and processing circuitry 29 of FIG. 2. As shown in FIG. 3, software that may be implemented on the electronic device 10 may include operating system 46 and applications 48. The applications 48 may include productivity applications 50 such as word processing applications, document management applications, applications for viewing and editing Portable Document Format (PDF) files, applications for viewing presentations, and spreadsheet applications. The applications 48 may also include media playback applications such as video applications, electronic book readers, and applications for playing audio files (e.g., with the simultaneous display of cover art, lyrics, and other associated information). The applications 48 may include games 54, video and photo editing applications 56, and other applications 58. The games 54 may include games with static image content such as word games and moving images (video) such as action games. Editing applications 56 may be used to edit videos, to edit digital photographs, and to edit other digital imaging data. Applications 58 may include applications for displaying stock prices and other financial data, applications for displaying reviews, applications for displaying travel information, applications for displaying weather information, applications for implementing remote control functions for controlling selected audio visual devices, applications for implementing processes as disclosed in embodiments discussed below, and other applications.

When running application and operating system software such as the applications 48 and the operating system 46, the electronic device 10 may receive user input from a touch screen, keyboard, touch pad, voice recognition function, or other user input resources and may provide a user of device with audio output using speakers or other audio equipment. Visible output may be displayed for the user with the wraparound display 12 using the applications 48 and/or the operating system 46. The visible output that is displayed for the user may include static content and or moving content. Displayed content may include still and/or moving images such as digital image data, video, graphics, text, game output, etc.

In some applications, content may be displayed on the wraparound display 12 in a wrapped fashion (i.e., using an approach that takes advantage of the wrapped display shape of the wraparound display 12). For example, content may be displayed on the wraparound display 12 that circulates around the wraparound display 12 continuously, as with a scrolling stock ticker, in which it appears that one displayed item is shifted out at one end of the wraparound display and a new item is shifted into the wraparound display at the other end. For another example, game content may be displayed for a user that continually updates in response to rotational motion of the electronic device 10 as a user rotates the wraparound display 12 (and the electronic device 10).

The wraparound display 12 may, if desired, have a display cover structure. The display cover structure may be formed from a transparent material with a hollow shape. As an example, the display cover structure may have the shape of an elongated hollow structure such as a hollow cylinder or a hollow tube with a circular or non-circular cross-sectional shape. A flexible display layer may be mounted on the inner surface of the hollow display cover structure. For example, a flexible display layer may be attached to an inner surface of a hollow display cover structure using adhesive.

A display cover structure is formed in a conventional manner. For example, it may be formed from a transparent material such as clear glass (e.g., borosilicate glass, fused silica, etc.), transparent plastic, clear ceramic (e.g., aluminum oxynitride), etc. With one illustrative arrangement, which may sometimes be described herein as an example, display cover structures may be formed from a transparent crystalline material such as sapphire (aluminum oxide), zirconium dioxide, or other materials that are clear and hard. An advantage of materials of this type is that they may exhibit elevated hardness values (e.g., values of 9 Mohs, 7 Mohs or above, 8 Mohs or above, or other values above 6 Mohs, which is typical for borosilicate glass). Sapphire display cover structures may be grown as single crystals by pulling a boule of sapphire from a melt.

The circuitry for the electronic device 10 such as the storage and processing circuitry 29 associated with input-output devices 32 of FIG. 2 is implemented using components that are mounted within the display 12 in a conventional manner. For example, the circuitry for the electronic device 10 is implemented using electrical components, which includes one or more integrated circuits, discrete components such as inductors, resistors, and capacitors, components such as switches, filters, power supply components, connectors, sensors, input-out-out devices, and other electronic devices.

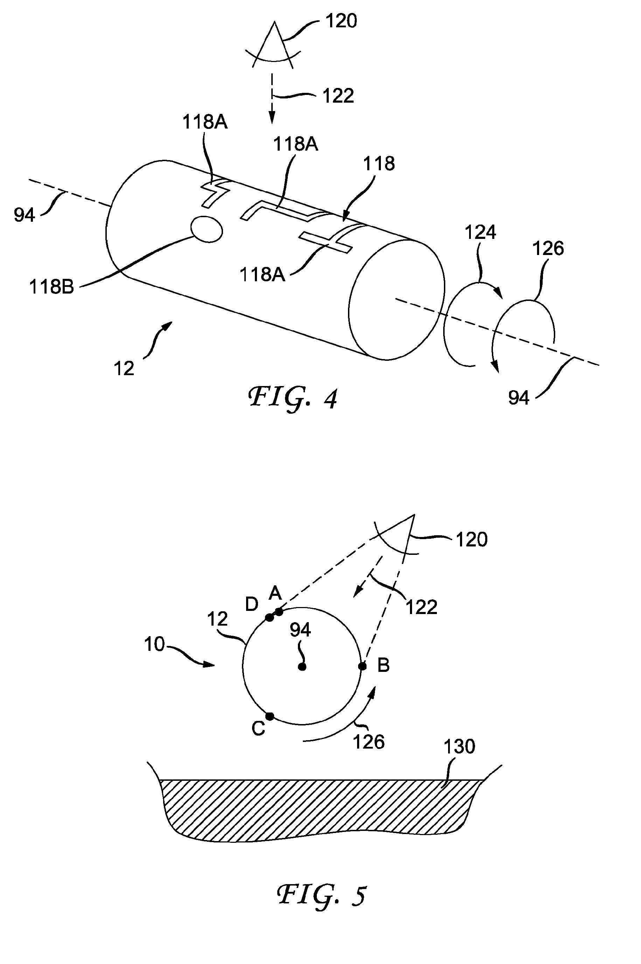

FIG. 4 is a perspective view of the wraparound display 12 in the process of displaying content 118 for a user of the electronic device 10. The user may be positioned, for example, at viewer location 120 and may view display 12 in direction 122, called viewing line 122 in the following discussion. As the user is using the electronic device 10, the user may rotate device 10 about axis 94, which is the longitudinal axis or the Z axis of the electronic device 10 shown in FIG.1. For example, while staying in a fixed viewing location such as position 120, the user may rotate display 12 in counterclockwise direction 126 about axis 94. At the same time as the user is rotating the display 12 (and the electronic device 10) in a counterclockwise fashion, the electronic device 10 may rotate content 118 (or some of content 118) on the surface of the wraparound display 12 in the opposite direction (i.e., in clockwise direction 124). As used herein rotating the display 12 means the electronic device 10 is rotated, whereas rotating or shifting content means that the content is rotated with respect to the wraparound display 12, i.e., an item in the content is moved from one position of the wraparound display 12 to another position in the rotating direction regardless of whether the wraparound display 12 (and the electronic device 10) is stationary or not.

In one embodiment, the content 118 (or some of content 118) may be continuously shifted in one direction, for example, direction 124, while the electronic device 10 is stationary and when the user rotates the electronic device 10 with respect to the Y axis in one direction, the content 118 (or the some of the content 118) is shifted along the Z axis in the rotating direction.

An accelerometer, gyroscope, and/or other sensors in the electronic device 10 may be used in monitoring the rotation and orientation of the electronic device 10 and the display 12 in real time. Content can be displayed in synchronization with the rotation of display 12, if desired.

By rotating or shifting some of content 118 to counteract the rotation of the wraparound display 12, the electronic device 10 may maintain portions of content 118 stationary with respect to viewer position 120 while other portions of content 118 are allowed to rotate or shift with the display. For example, a game or other software may be implemented on the electronic device 10 that contains a ball or other object such as object 118B. The object 118B may be moved relative to the surface of the display 12 by tilting the display 12, causing, for example, the object 118B to move along the Z axis in the tilting direction, and rotating the display 12 causing, for example, the object 118B to stay in the same position relative to the user's viewing direction. Content 118A may remain stationary with respect to the surface of the wraparound display 12 as the user manipulates the wraparound display 12.

FIG. 5 is a side view of the electronic device 10 showing how the wraparound display 12 may be viewed in direction 122 by a user at viewer position 120 while rotating the electronic device 10 and the wraparound display 12 in direction 126. The surface of the wraparound display 12 may be considered to be made up of four contiguous areas -- a first area extending from A to B, a second area extending from B to C, a third area extending from C to D, and a fourth area extending from D to A. The viewing angle is formed by the imaginary line from the viewer position to point A and the imaginary line from the view position to point B. The electronic device 10 may use an accelerometer, gyroscope, or other sensors in determining the orientation of the electronic device 10 and the wraparound display 12 relative to the Earth (surface 130). Using this information, the electronic device 10 can display information on the wraparound display 12 in real time that is based on the user's positioning of the electronic device 10 relative to the Earth and/or other appropriate inputs (e.g., time, date, content, etc.).

As used herein, the center of the viewing angle is the point where an imaginary line, which is the shortest line from the viewer position 120 to the surface of the wraparound display 12, touches the wraparound display 12. Although viewing from the side view in FIG. 5, the center is a point, it is actually a line on the wraparound display 12 extending from one end surface to the other in the Z direction. The center can be automatically detected by the electronic device 10 equipped with a camera, such as a 360-degree camera, for detecting the viewer position 120 using conventional image processing methods to detect the user's eyes. With two camera views, the electronic device 10 can also detect the distance between user's eyes and the electronic device 10. For simplicity, the center of the viewing angle can be set by a user by, for example, selecting a displayed item and this set center is treated as the center of the viewing angle in the following discussion, but as mentioned, the center can be automatically detected by the electronic device 10 as well.

In one embodiment, the end cap 129 is a knob, which can be rotated from 0 degree to 360 degrees with respect to the seam without rotating the electronic device 10. The position of the knob is set as the center of the viewing angle, which may be stored in the memory for next use of the electronic device 10.

In another embodiment, the electronic device 10 is operative or configured to detect a period of inactivity, for example, being left on a table for a period. When the user moves the electronic device 10, the electronic device 10 is configured or operative to detect such a movement using one or more of the sensors. In response to the detection, the electronic device 10 is operative or configured to display a visual clue, such as a dash line, moving around the longitudinal axis Z. When the user sees this visual clue in front of his eyes, the user indicates to the electronic device 10 that this position of the visual clue is the center of the viewing center by, for example, shaking the electronic device 10 and the electronic device 10 upon detecting the user indication is configured or operative to stop moving the visual clue and/or stop displaying the visual clue.

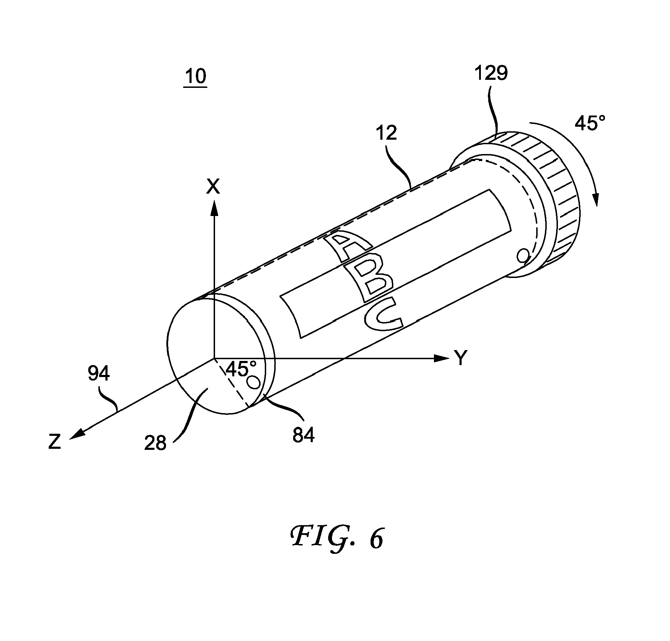

As stated above, content can be rotated about the longitudinal axis 94 in synchronization with the rotation of the wraparound display 12. For example, as shown in FIG. 6, the user rotates the electronic device 10 in FIG. 1 45 degrees ($\pi/4$) clockwise viewing from the end surface 28 and the displayed content is rotated by the same amount.

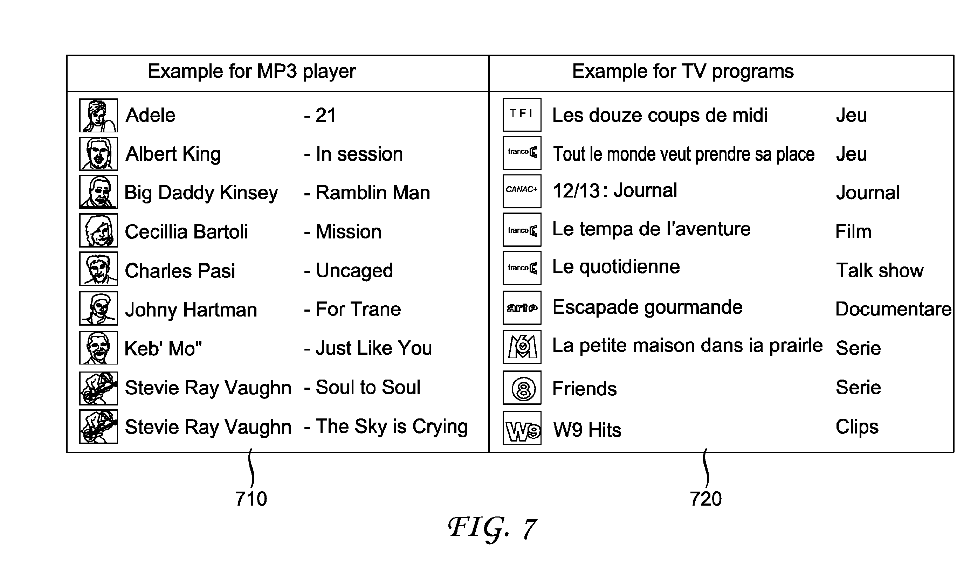

The content may be stored in the electronic device 10 or received from an external device. FIG. 7 shows an example of two lists of items respectively received from two of the playing devices 44, an MP3 player and a television, via, for example, a network connection. List 710 is a list of audios received from the MP3 player and list 720 is a list of television (TV) programs from the TV. Once connected to one of the playing devices, the electronic device 10 receives, for example, minimal information about the available content on the playing device. The content is stored in the electronic device 10 if the electronic device 10 is also the playing device.

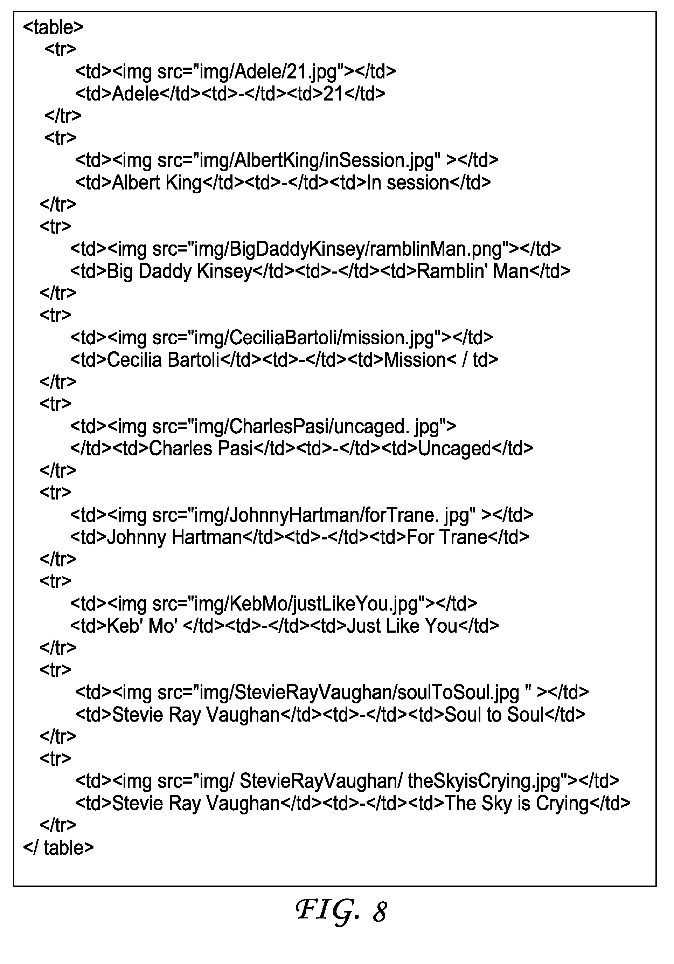

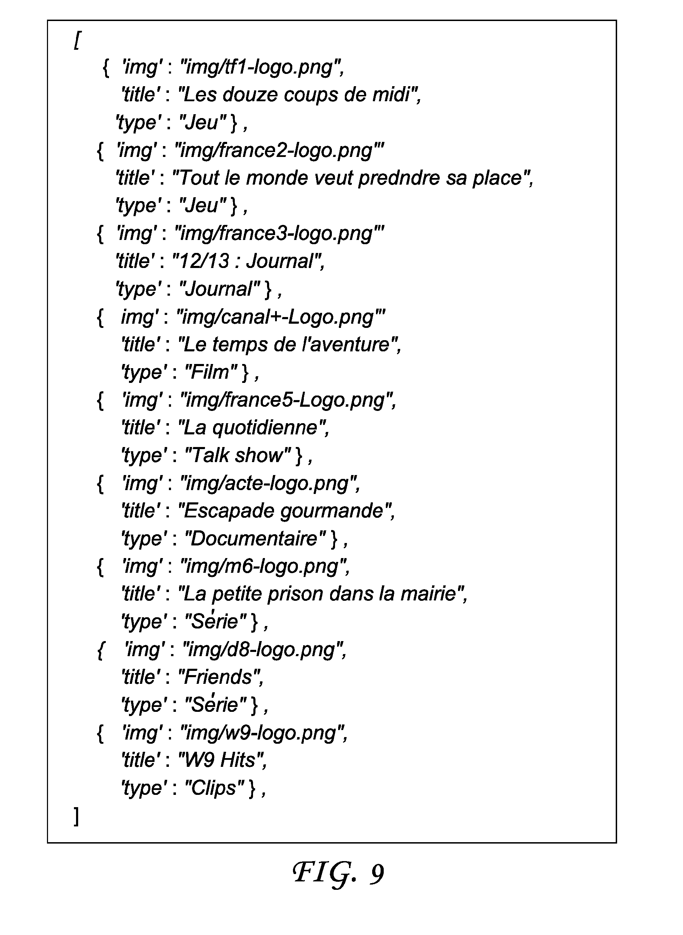

The content information may be transmitted to the electronic device 10 from an external playing device in many ways, for example, single bitmap with tags associated with surfaces, descriptors transmitted as JavaScript Object Notation (JSon) or EXtensible Markup Language (XML) content. For example, the list 710 is transmitted as XML content shown in FIG. 8 and the list 720 is transmitted as JSon content shown in FIG. 9.

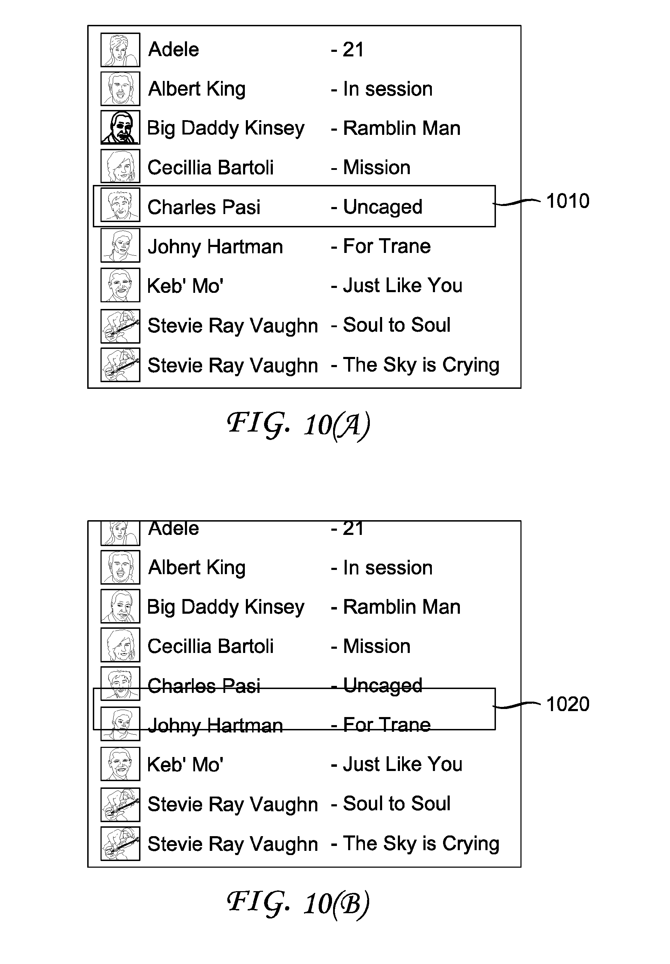

A received list can be displayed on the wraparound display 12. For example, FIG. 10(a) shows the flattened view of the list 710 displayed on the wraparound display 12. The electronic device 10 may highlight or place a cursor on a predetermined item, for example, the first item on the list. A user may move the cursor or highlight to a different item by touching the different item. In the example shown in FIG. 10(a), the user has placed the cursor or highlight on item 1010 entitled "Charles Pasi" by touching the item 1010. As such, the item 1010 is highlighted or pointed to by a cursor. As discussed above, the position of the item 1010 newly highlighted or pointed by a cursor on the wraparound display 12 may illustratively be set as the center of the viewing angle by the processing circuitry in response to the placing or the highlight or the cursor at the item 1010 even if the item 1010 is shifted out of this position.

At this point, the electronic device 10 may be in one of first and second modes. When the electronic device 10 is in the second mode, the user may touch one of the displayed items to cause the electronic device 10 go back to the first mode. The user can switch the electronic device 10 into the second mode from the first mode by, for example, exerting a rotational impulse. A rotational impulse as used herein is a movement generated by rotating the electronic device 10 in one direction for any angle, preferably with a rotational acceleration of 0.01 $\pi$ radian/second$^2$ or less for an angular displacement of 0.5 radian or less. For example, the new shifting speed is the current shifting speed times (1 + angular displacement/$2\pi$) if the shifting speed is increased or the current shifting speed times (1 - angular displacement/$2\pi$) if the

shifting speed is decreased. After receiving a rotational impulse, the electronic device 10 switches into the second mode and shifts the list in the wraparound display 12 at a predefined speed in the same direction as that of the received rotational impulse, while the electronic device 10 remains stationary.

In the first mode, the displayed content is synchronous with the rotation of the electronic device 10 and the user can rotate the electronic device 10 to see different displayed items that are displayed on the wraparound display 12. For example, in FIG. 6, the displayed items and the electronic device 10 are both rotated 45 degrees from the position shown in FIG. 1. Note that the displayed content may be just a portion of the content list because the wraparound display 12 can only display certain number of items in the list. Other items can be displayed by shifting the list in one direction manually or automatically.

In one embodiment of the second mode, the content continues to move or be shifted in one direction automatically until the beginning or the end of the content but the electronic device 10 remains stationary. That is, one displayed item is shifted out at one end, and a new item is shifted into the wraparound display 12 at the other end until no new item in the content can be shifted into the wraparound display 12. For example, if the content 710 displayed on the wraparound display 12 shown in FIG. 10(a) is shifted in the clockwise direction viewing from the end surface 28 of the electronic device 10, the shifting stops at the item entitled "Adele" displayed at one end of the wraparound display 12 because the item "Adele" is the first item in the content and no more item in the content 710 can be shifted into the wraparound display 12.

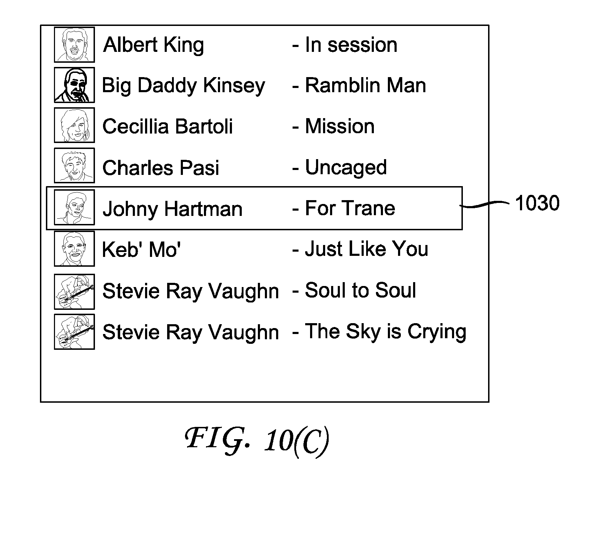

In another embodiment of the second mode, as shown in FIG. 10, the electronic device 10 continues to shift a displayed item out of the wraparound display 12 at one end automatically, even if no item can be shifted in at the other end.

Assuming that the electronic device 10 is in the first mode displaying the list 710, as shown in FIG. 10(a), and the user rotates the electronic device 10 clockwise, the electronic device 10 keeps the cursor or the highlight at the same physical position of the wraparound display 12, i.e., in the same X, Y coordinates. As shown in FIG. 10(b), the cursor or the highlight is transitioning from item entitled "Charles Pasi," to the immediately next item entitled "Johny Hartman" and at FIG. 10(c), the cursor or highlight covers the item entitled "Johny Hartman." This process continues until the electronic device 10 changes to the second mode. In one embodiment, a shifted out item at one end may be shifted in at the other end.

As discussed above, when the electronic device 10 is in the first mode, rotating the electronic device in one direction for any angle switches the electronic device 10 into the second mode and the electronic device 10 shifts the content in the rotational direction with a predefined speed. During the second mode, if the user rotates once more in the same direction for any angle, the electronic device 10 increases the shifting/rotating speed. On the other hand, if the user rotates the electronic device 10 in a different direction, for any angle, the electronic device 10 decreases the shifting/rotating speed.

Any kind of formula can be used here to derive the new shifting speed. For example, the new speed is increased by a predefined amount in percentage, such as 25% more than the current shifting speed, i.e., the new shifting speed is the product of the current speed times 1.25 if the shifting speed is increased. If the shifting speed is decreased, the new shifting speed is the current speed multiplied by 0.75. In this embodiment, the electronic device 10 may store a predefined maximum shifting speed, such as $\pi$ radians/second, and any attempt to increase the shifting speed when it reaches the maximum will fail and the electronic device 10 will maintain the maximum shifting speed.

In another embodiment, the new shifting speed is the current shifting speed plus or minus a predefined amount, for example, 0.1 $\pi$ radian/second, if the shifting speed is increased or decreased. Again, the electronic device 10 may store a maximum shifting speed and the new shifting speed cannot go beyond the maximum. Repeated attempts to decrease the shifting speed may cause the electronic device 10 to shift the content in the different direction, i.e., the shifting speed is negative. Again, the electronic device 10 may limit the shifting speed in the different direction to the same stored maximum speed. The stored maximum shifting speed may be set up by user by invoking certain user interface (not shown), for example, by pressing the setting button.

In another embodiment, the new shifting speed depends on the angular displacement of the rotational impulse. For example, the new shifting speed is the current shifting speed times (1 + angular displacement/$2\pi$) if the shifting speed is increased or the current shifting speed times (1 - angular displacement/$2\pi$) if the shifting speed is decreased. Similarly, the new shifting speed may depend on the rotational acceleration of the rotational impulse. For example, the new shifting speed is the current shifting speed plus the rotational acceleration if the shifting speed is increased or the current shifting speed minus the rotational acceleration if the shifting speed is decreased.

In one embodiment, in response to receiving a decreasing user command or a separate command different from an increasing or decreasing command, the electronic device 10 is operative or configured to continuously to decrease the shifting speed over time and when the shifting speed is below a threshold, the electronic device 10 is operative or configured to stop the shifting of the displayed content items. This way, the shifting speed of the displayed content items smoothly slow down until it comes to a complete stop. Any decreasing function can be used in this embodiment, such as, but not limited to linear and geometric functions.

In one embodiment, either clicking the selection button or shaking the electronic device 10 stops the navigation process and sends to a playing device a play command with the information of the selected item for executing, such as playing, the selected item if the playing device, such as the external equipment 44, is not the electronic device 10 itself. The term "shaking" as used herein means rotating the electronic device 10 with respect to the Y axis, which is perpendicular to the longitudinal axis Z, preferably with a rotational acceleration of $0.01\ \pi$ radian/second$^2$ or less for an angular displacement of $0.5\ \pi$ radian or less. In another embodiment, the user may use a voice command to stop the navigation. In yet another embodiment, the user can stop the navigation by pressing the adjusting knob.

The command sent to the external playing device 44 should comprise some identification of the selected item. For example, the command includes the 'img' attribute and its value or a numerical identifier unique to the selected item, or the index of the item position within the displayed list would be sufficient, but any other means, such as the title of the selected item can be envisaged. The transmission is done by, for example, exchanging information in a JSon or XML form, with the connected playing device. If the playing device is the electronic device 10 itself, the electronic device 10 starts executing, such as playing, the selected item.

If the electronic device 10 is not the playing device and the electronic device 10 is used as a remote control for the playing device, the communication of the content information between the playing device and the electronic device 10 can be done in many different ways. The following lists some examples:

1. The playing device sends information about its whole content and the electronic device 10 manages the content information by displaying the list of items in the content on its wraparound display 12 for a user to select one item for execution.
2. The electronic device 10 requests the playing device for information of a specified number of items for display on the wraparound display 12 and when one or more displayed items are shifted out of the wraparound display 12, the electronic device 10 requests the playing device to send information of one or more items for shifting into the wraparound display 12.
3. This is an enhancement of example 2. The electronic device 10 buffers all the information that it has already received from the playing device and if a shift-in item is in the buffer, the electronic device 10 gets the information from the buffer and does not request the playing device to send the information of the shift-in item.

In one embodiment, once an item is selected, the electronic device 10 may execute the selected item by opening a new browsing session. For example, if the list is related to a music collection, the new browsing session allows the user to select an album in the collection. Once an album is selected, the electronic device 10 displays a list of songs in that selected album. The user can then select a song from the selected album.

As discussed above with respect to one embodiment, the electronic device 10 can be used as a remote control. In this embodiment, a home is equipped with a home network (HN) that embeds at least wireless capability. Additional Ethernet or Broadband over power line (BPL) may also be provided. Playing devices are connected to this HN. Each of these playing devices may provide a list of titles and/or icons that summarize their available content (either locally stored content or content available from external connections with the playing devices) to the electronic device 10, which is also connected to the HN. The electronic device 10 detects the available playing devices connected to the HN in a conventional manner, displays a list of playing devices, and allows the user to select one of the playing devices. In one embodiment, the electronic device 10 may select a predefined playing device or randomly select one of the playing devices automatically without the user manually selecting one. Manual selection can be performed in a similar manner described above for selecting a displayed item in content.

According to the principles of the embodiments of the invention, the displayed list items may be displayed with different display appearances according to the distances to the set center of viewing angle at the wraparound display 12, so that a user can see clearly for those items away from the center. For example, the font sizes may be changed, so that the display appeared to be flattened. That is, the font size or the number of vertical pixels (measured in the surface of the wraparound display 12 circumferentially) required for displaying an item is determined according to its distance from the center of the viewing angle. See FIG. 5 for an example of a viewing angle. The nearer a displayed item to the center of the viewing angle, as shown in FIG. 5, a smaller font is used, whereas the farther the displayed item away from the center of the viewing angle, a larger font is used. This is because for an area farther away from the center, the projected area in the plane perpendicular to the viewing line 122 becomes smaller and it is more difficult for a user to read. As an example of an embodiment of the invention, at the center of the display, an item is allocated with x vertical pixels, while on the top and bottom limits of the viewing angle, an item is allocated more than x vertical pixels. In one embodiment, the distance is the angle with respect to the Z axis from the center of the displayed item to the center of the viewing angle on the wraparound display 12. The angle distance is measured in the XY plane shown in FIG. 1 with respect to the Z axis and is not the viewing angle. According to one embodiment, the size of display of that item is a tangent function of the distance. For example, if the displayed item in the center of the viewing angle occupies x vertical pixels, such as 4 pixels, the size of display of an item having a distance of y degrees or radians is tan (y) + x. Some examples are

$$\tan (0.0°) + x = x \text{ pixels}$$

$$\tan (\pm 45.0°) + x = x + 1 \text{ pixels}$$

In another embodiment, the size of the display is x * (1 + tan (y)). Although number of pixels is used as an example, the font size or intensity can be used in a similar manner. If the function produces a non-integer answer, the electronic device 10 may round it, select the nearest smaller integer, or select the nearest larger integer as the size.

Since tan (±90.0°) = infinity, the maximum number of pixels or font size or intensity should be set.

Another example is that the size of the displayed item is x * (1 + 2y/π), where y has the unit of radian.

Yet another example, the distance, y, is simply the number of items between an item and the item in the viewing center plus 1 and the size of the displayed item is simply x + y.

In another embodiment, the intensity, such as gray scale, of a displayed item is set according to its distance to the center of the viewing angle. For example, the farther away from the center of an item, the darker the electronic device 10 displays the item.

In another embodiment, those items having an angle from the center of the viewing angle of over 45 degrees are not displayed because a user is unable to see those items. A user may use a setting menu to enable or disable this feature.

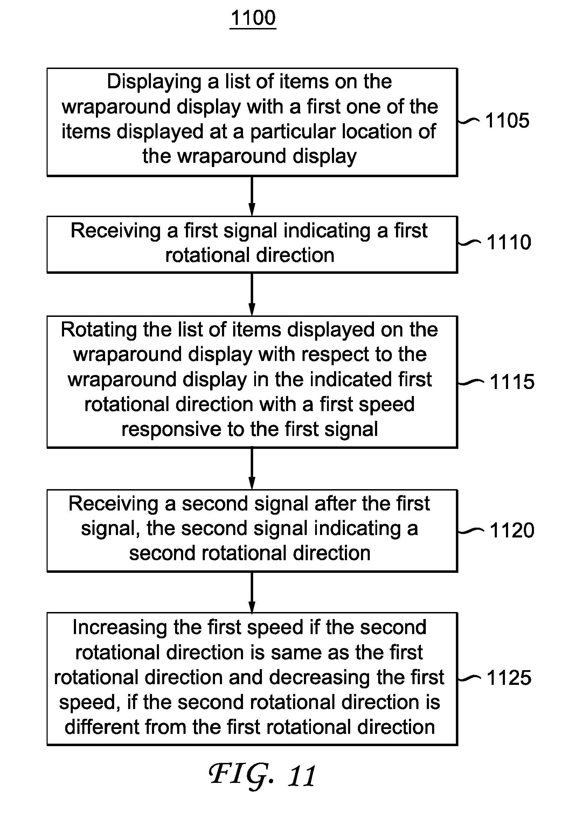

FIG. 11 shows an exemplary process 1100 executed by the electronic device 10 in accordance with the principles of the embodiments of the invention. At step 1105, the electronic device 10 is operative or configured to display content including more than one item on the wraparound display 12 with a first one of the items displayed at a particular location of the wraparound display 12. For example, as shown in FIG. 6, items entitled A, B, and C are displayed on the wraparound display 12. The first one of the items is the item entitled B, which is displayed at the center of the viewing angle, which is the particular location in the wraparound display 12. This particular location can be set as the center of the viewing angle by the user by, for example, placing the cursor or highlight at the item displayed at that particular location in the first mode. Once the center of viewing is set, this particular location in the wraparound display 12 is always treated as the center of the viewing angle regardless whether item B is shifted to other position in the wraparound display 12 until the user changes the set center. For example, if the particular location is 100 pixels circumferentially away from the seam, i.e., line 0-0 in FIG. 6, the center of the viewing angle is at the location 100 pixels circumferentially away from the seam before the user changes it even if the user is looking at a different angle. As such, when the electronic device 10 shifts the displayed items, another item other than item entitled B may be displayed at that particular location of the wraparound display. In this example, the electronic device 10 is illustratively in the first mode.

At step 1110, the processing circuitry of the electronic device 10 is operative or configured to receive a first signal indicating a first rotational direction, for example, due to user rotation of the electronic device about the longitudinal axis. The user rotates the electronic device 10 (and the wraparound display 12) using for example, the wheel 129, in the first rotational direction with respect to the longitudinal axis Z or 94 for any angle, preferably less than a predefined threshold, such as 0.5 radian, so that the set center of viewing angle does not deviate too much from the center of the real viewing angle. The processing circuitry of the electronic device 10 receives the direction information by detecting the rotational movement of the electronic device 10 using, for example, an accelerometer, gyroscope, and/or other sensors in the electronic device 10.

At step 1115, the processing circuitry of the electronic device 10 is operative or configured to shift/rotate the list of items with respect to the wraparound display 12 and the longitudinal axis in the indicated first rotational direction with a first speed, which may be a predetermined speed, responsive to the first signal. The predefined speed, for example, is 0.1 radian/second, and can be set by the user. As discussed previously, in response to the rotating movement, the processing circuitry of the electronic device 10 is configured or operative to switch the electronic device 10 into the second mode, in which the content continues to be shifted/rotated in one direction automatically with respect to the longitudinal axis but the electronic device 10 remains stationary. For example, if the first rotational direction is clockwise with respect to the longitudinal axis viewing from the end surface 28 and the initial display on the wraparound display 12 at step 1105 is shown in FIG. 10(a), FIGs. 10(b) and 10(c) show two instances of the future display after step 1115 with the electronic device 12 remains stationary. In an embodiment, the shifting/rotating speed responsive to the first signal is proportional to the value of acceleration that the gyroscope detects from the rotational impulse provided by the user.

At step 1120, the processing circuitry of the electronic device 10 is operative or configured to receive a second signal after the first signal, the second signal indicating a second rotational direction. After generating the first signal, the user, for example, can rotate the electronic device 10 (and the wraparound display 12) in the second rotational direction with respect to the longitudinal axis Z or 94 for any angle, preferably less than the predefined threshold, to generate the second signal. The processing circuitry of the electronic device 10 receives the direction information by detecting the rotational movement of the electronic device 10 using, for example, an accelerometer, gyroscope, and/or other sensors in the electronic device 10.

At step 1125, the processing circuitry of the electronic device 10 is operative or configured to increase the first speed, which is the current shifting/rotating speed of the list of items if the second rotational direction is same as the first rotational direction and decrease the first speed, if the second rotational direction is different from the first rotational direction. In one embodiment, the increased first speed is the current shifting/rotating speed of the list of items plus a first predefined amount and decreased first speed is the current speed minus a second predefined amount. For example, the first and second predefined amounts are 0.1 radian/second. The first and second predefined amounts may also be different. For example, one is 0.1 radian/second and the other 0.2 radian/second.

As discussed previous, the processing circuitry of the electronic device 10 may continue to decrease the current shifting/rotating speed of the list of items in response to receiving signals indicating rotational direction different from the first rotational direction, to a point that the shifting speed becomes negative with respect to the first speed. For example, if the electronic device 10 is shifting/rotating clockwise 0.1 radian/second and the processing circuity receives two signals indicating counterclockwise direction rotation, each reducing the shifting/rotating speed by 0.1 radian/second, the resulting shifting/rotating speed will be -0.1 radian/second. That is the electronic device 10 is shifting/rotating the displayed items in the counterclockwise direction with a speed of 0.1 radian/second.

In one embodiment, the processing circuitry of the electronic device 10 is operative or configured to display the first one of the items with a first appearance, such as a first font size or a first intensity and a second one of the items is displayed with a second appearance, such as a second font size or a second intensity. The second appearance is derived according to a distance measured circumferentially in the wraparound display from the second one of the items to the first one of the items.

In one embodiment, the processing circuitry of the electronic device 10 is operative or configured to receive a user selection signal and in response to the user selection signal, stop displaying items that have a distance to the first one of the items over 45 degrees or $\pi/4$ radians. This is because those areas are blocked by the electronic device 10. As discussed previous, the user can invoke a setting menu to enable or disable this feature. Preferably, the default is disabling this feature.

In one embodiment, the processing circuit of the electronic device 10 is operative or configured to receive a fourth user signal and responsive to the fourth user signal, stop the shitting/rotating of the list of items with respect to the wraparound display 12. The fourth user signal is generated by either activating the selection button or shaking the electronic device 10. The electronic device 10 switches back to the first mode in response to the four user signal. In addition, the processing circuitry of the electronic device 10 is operative or configured to select the item at the particular location for execution in response to the fourth user signal. For example, if the selected item is a video program and the electronic device 10 is the playing device, the processing circuitry of the electronic device 10 is operative or configured to play back the video program and if another device is the playing device, the processing circuitry of the electronic device 10 is operative or configured to send a signal indicating the selected item to the playing device for playing back the selected video program.

The present description illustrates the principles of the present disclosure. It will thus be appreciated that those skilled in the art will be able to devise various arrangements that, although not explicitly described or shown herein, embody the principles of the disclosure and are included within its scope.

All examples and conditional language recited herein are intended for informational purposes to aid the reader in understanding the principles of the disclosure and the concepts contributed by the inventor to furthering the art, and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein represent conceptual views of illustrative circuitry embodying the principles of the disclosure. Similarly, it will be appreciated that any flow charts, flow diagrams, state transition diagrams, pseudo code, and the like represent various processes that can be substantially represented in computer readable media and so executed by a computer or processor, whether or not such computer or processor is explicitly shown. The computer readable media and code written on can be implemented in a transitory state (signal) and a non-transitory state (e.g., on a tangible medium such as CD-ROM, DVD, Blu-Ray, Hard Drive, flash card, Secured Digital (SD) memory card, or other type of tangible storage medium).

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor ("DSP") hardware, read only memory ("ROM") for storing software, random access memory ("RAM"), and nonvolatile storage.

Other hardware, conventional and/or custom, may also be included. Similarly, any switches/keys shown in the figures or mentioned above are conceptual only. Their function may be carried out through the operation of program logic, through dedicated logic, through the interaction of program control and dedicated logic, or even manually, the particular technique being selectable by the implementer as more specifically understood from the context.

Although embodiments which incorporate the teachings of the present disclosure have been shown and described in detail herein, those skilled in the art can readily devise many other varied embodiments that still incorporate these teachings. It is noted that modifications and variations can be made by persons skilled in the art in light of the above teachings.

## Claims

1. A method for operating an electronic device having a wraparound display, the method comprising:

   receiving (1110) a first signal indicating a first rotational direction; **characterized by** rotating (1115) a list of items displayed on the wraparound display with respect to the wraparound display in the indicated first rotational direction at a first speed responsive to the first signal;
   receiving (1120) a second signal after the first signal, the second signal indicating a second rotational direction; and
   increasing (1125) the first speed if the second rotational direction is same as the first rotational direction and decreasing the first speed, if the second rotational direction is different from the first rotational direction.

2. The method of claim 1, wherein a first one of the items is displayed with a first font size or a first intensity and a second one of the items is displayed with a second font size or a second intensity according to a distance in the wraparound display to the first one of the items.

3. The method of claim 1, wherein the increased first speed is a predetermined speed plus a first amount and decreased first speed is the predetermined speed minus a second amount.

4. The method of claim 3, further comprising:

   receiving at least one more signal after the second signal, the at least one more signal indicating a rotational direction different from the first rotational direction; and
   further decreasing the first speed according a number of the at least one more signal received, wherein the further decreased first speed is negative.

5. The method of one of claims 1-4, further comprising receiving a user selection signal and in response to the user selection signal, stopping displaying items that have a distance to the first one of the items over 45 degrees.

6. The method of one of claims 1-5, further comprising receiving a fourth user signal and responsive to the fourth user signal, stopping the rotating of the list of items.

7. The method of claim 6, wherein the item at a particular location when the rotating is stopped is selected for execution.

8. A non-transitory program storage device readable by machine, tangibly embodying a program of instructions executable by the machine to perform program steps of one of claims 1-7.

9. An electronic device (10) comprising:

   storage means (29) for storing programs and data;
   a wraparound display; and
   processing means (29) configured to receive a first signal indicating a first rotational direction, **characterized in that** the processing means (29) is configured to rotate a list of items displayed on the wraparound display with respect to the wraparound display in the indicated first rotational direction with a first speed responsive to the first signal; receive a second signal after the first signal, the second signal indicating a second rotational direction; and increase the first speed if the second rotational direction is same as the first rotational direction and decrease the first speed, if the second rotational direction is different from the first rotational direction.

10. The electronic device of claim 9, wherein a first one of the items is displayed with a first font size or a first intensity and a second one of the items is displayed with a second font size or a second intensity according to a distance in the wraparound display to the first one of the items.

11. The electronic device of claim 9, wherein the in-

21 EP 3 070 588 A1 22

creased first speed is a predetermined speed plus a first amount and decreased first speed is the predetermined speed minus a second amount.

12. The electronic device of claim 11, wherein the processing means (29) is configured to receive at least one more signal after the second signal, the at least one more signal indicating a rotational direction different from the first rotational direction; and further decrease the first speed according a number of the at least one more signal has been received, wherein the further decreased first speed is negative.

13. The electronic device of claims 9-12, wherein the processing means (29) is configured to receive a user selection signal and in response to the user selection signal, stop displaying items that have a distance to the first one of the items over 45 degrees.

14. The electronic device of claim 9-13, wherein the processing means (29) is configured to receive a fourth user signal and responsive to the fourth user signal, stop the rotating of the list of items.

15. The electronic device of claim 14, wherein the processing means (29) is configured to select the item at a particular location for execution when the rotating is stopped.

12

*FIG. 1*

10

ELECTRONIC DEVICE

STORAGE AND
PROCESSING
CIRCUITRY — 29

32

INPUT-OUTPUT DEVICES 34

SENSORS (E.G, ACCELEROMETER
AMBIENT LIGHT SENSOR, PROXIMITY
SENSOR, TOUCH SENSOR, COMPASS, ETC)

36

DISPLAY, STATUS INDICATOR LIGHTS,
SPEAKER, MICROPHONE, CAMERAS, ETC

38

COMMUNICATIONS CIRCUITRY
(E.G., WIRED CIRCUITRY,
WIRELESS CIRCUITRY ETC.)

ACCESSORIES

42

NETWORKS, ETC.

44

FIG. 2

10

48

APPLICATIONS 50

PRODUCTIVITY
APPLICATIONS

52

MEDIA PLAYBACK
APPLICATIONS

54

GAMES

56

VIDEO AND PHOTO
EDITING APPLICATIONS

58

OTHER APPLICATIONS

46

OPERATING SYSTEM

*FIG. 3*

*FIG. 4*

*FIG. 5*

*FIG. 6*

| Example for MP3 player | | | Example for TV programs | | |
|---|---|---|---|---|---|
| | Adele | - 21 | TFI | Les douze coups de midi | Jeu |
| | Albert King | - In session | franco | Tout le monde veut prendre sa place | Jeu |
| | Big Daddy Kinsey | - Ramblin Man | CANAC+ | 12/13 : Journal | Journal |
| | Cecillia Bartoli | - Mission | franco | Le tempa de l'aventure | Film |
| | Charles Pasi | - Uncaged | franco | Le quotidienne | Talk show |
| | Johny Hartman | - For Trane | arte | Escapade gourmande | Documentare |
| | Keb' Mo" | - Just Like You | M | La petite maison dans ia prairle | Serie |
| | Stevie Ray Vaughn | - Soul to Soul | 8 | Friends | Serie |
| | Stevie Ray Vaughn | - The Sky is Crying | W9 | W9 Hits | Clips |

710                                              720

*FIG. 7*

EP 3 070 588 A1

```
<table>
   <tr>
      <td><img src="img/Adele/21.jpg"></td>
      <td>Adele</td><td>-</td><td>21</td>
   </tr>
   <tr>
      <td><img src="img/AlbertKing/inSession.jpg" ></td>
      <td>Albert King</td><td>-</td><td>In session</td>
   </tr>
   <tr>
      <td><img src="img/BigDaddyKinsey/ramblinMan.png"></td>
      <td>Big Daddy Kinsey</td><td>-</td><td>Ramblin' Man</td>
   </tr>
   <tr>
      <td><img src="img/CeciliaBartoli/mission.jpg"></td>
      <td>Cecilia Bartoli</td><td>-</td><td>Mission< / td>
   </tr>
   <tr>
      <td><img src="img/CharlesPasi/uncaged. jpg">
      </td><td>Charles Pasi</td><td>-</td><td>Uncaged</td>
   </tr>
   <tr>
      <td><img src="img/JohnnyHartman/forTrane. jpg" ></td>
      <td>Johnny Hartman</td><td>-</td><td>For Trane</td>
   </tr>
   <tr>
      <td><img src="img/KebMo/justLikeYou.jpg"></td>
      <td>Keb' Mo' </td><td>-</td><td>Just Like You</td>
   </tr>
   <tr>
      <td><img src="img/StevieRayVaughan/soulToSoul.jpg " ></td>
      <td>Stevie Ray Vaughan</td><td>-</td><td>Soul to Soul</td>
   </tr>
   <tr>
      <td><img src="img/ StevieRayVaughan/ theSkyisCrying.jpg"></td>
      <td>Stevie Ray Vaughan</td><td>-</td><td>The Sky is Crying</td>
   </tr>
</ table>
```

*FIG. 8*

```
[
    {  'img' : "img/tf1-logo.png",
       'title' : "Les douze coups de midi",
       'type' : "Jeu" } ,
    {  'img' : "img/france2-logo.png"'
       'title' : "Tout le monde veut predndre sa place",
       'type' : "Jeu" } ,
    {  'img' : "img/france3-logo.png"'
       'title' : "12/13 : Journal",
       'type' : "Journal" } ,
    {   img' : "img/canal+-Logo.png"'
       'title' : "Le temps de l'aventure",
       'type' : "Film" } ,
    {  'img' : "img/france5-Logo.png",
       'title' : "La quotidienne",
       'type' : "Talk show" } ,
    {  'img' : "img/acte-logo.png",
       'title' : "Escapade gourmande",
       'type' : "Documentaire" } ,
    {  'img' : "img/m6-logo.png",
       'title' : "La petite prison dans la mairie",
       'type' : "Série" } ,
    {   'img' : "img/d8-logo.png",
       'title' : "Friends",
       'type' : "Série" } ,
    {  'img' : "img/w9-logo.png",
       'title' : "W9 Hits",
       'type' : "Clips" } ,
]
```

FIG. 9

| | Adele | - 21 |
|---|---|---|
| | Albert King | - In session |
| | Big Daddy Kinsey | - Ramblin Man |
| | Cecillia Bartoli | - Mission |
| | Charles Pasi | - Uncaged | ~ 1010 |
| | Johny Hartman | - For Trane |
| | Keb' Mo' | - Just Like You |
| | Stevie Ray Vaughn | - Soul to Soul |
| | Stevie Ray Vaughn | - The Sky is Crying |

## FIG. 10(A)

| | Adele | - 21 |
|---|---|---|
| | Albert King | - In session |
| | Big Daddy Kinsey | - Ramblin Man |
| | Cecillia Bartoli | - Mission |
| | Charles Pasi | - Uncaged | ~ 1020 |
| | Johny Hartman | - For Trane |
| | Keb' Mo' | - Just Like You |
| | Stevie Ray Vaughn | - Soul to Soul |
| | Stevie Ray Vaughn | - The Sky is Crying |

## FIG. 10(B)

| | Albert King | - In session |
|---|---|---|
| | Big Daddy Kinsey | - Ramblin Man |
| | Cecillia Bartoli | - Mission |
| | Charles Pasi | - Uncaged |
| | Johny Hartman | - For Trane |
| | Keb' Mo' | - Just Like You |
| | Stevie Ray Vaughn | - Soul to Soul |
| | Stevie Ray Vaughn | - The Sky is Crying |

~ 1030

*FIG. 10(C)*

<u>1100</u>

| Displaying a list of items on the wraparound display with a first one of the items displayed at a particular location of the wraparound display | 1105 |

| Receiving a first signal indicating a first rotational direction | 1110 |

| Rotating the list of items displayed on the wraparound display with respect to the wraparound display in the indicated first rotational direction with a first speed responsive to the first signal | 1115 |

| Receiving a second signal after the first signal, the second signal indicating a second rotational direction | 1120 |

| Increasing the first speed if the second rotational direction is same as the first rotational direction and decreasing the first speed, if the second rotational direction is different from the first rotational direction | 1125 |

*FIG. 11*

Europäisches
Patentamt

European
Patent Office

Office européen
des brevets

# EUROPEAN SEARCH REPORT

Application Number

EP 15 30 5386

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | WO 2014/108634 A2 (CONSERVATOIRE NAT ARTS [FR]) 17 July 2014 (2014-07-17)<br>* page 1, line 30 - page 4, line 21 *<br>* page 5, line 20 - page 5, line 30 *<br>* page 13, line 2 - page 13, line 9 *<br>* page 15, line 13 - page 16, line 31 *<br>* figures 1A,3A,3B,5A,5B,5C,8 * | 1-6,8-14<br><br>7,15 | INV.<br>G06F3/0485<br>G06F1/16<br>G06F3/0362 |
| X,D<br>Y | WO 2013/188111 A2 (APPLE INC [US]) 19 December 2013 (2013-12-19)<br>* page 1, line 20 - page 3, line 8 *<br>* page 7, line 4 - page 7, line 13 *<br>* page 24, line 2 - page 24, line 28 *<br>* page 26, line 4 - page 26, line 31 *<br>* page 27, line 33 - page 28, line 20 *<br>* page 29, line 8 - page 29, line 29 *<br>* page 30, line 4 - page 30, line 9 *<br>* figures 2,3,19,21,25,28 * | 1,2,5,<br>8-10,13<br><br>7,15 | |
| Y<br><br>A | WO 2009/152879 A1 (SONY ERICSSON MOBILE COMM AB; KUIKEN MARTIJN [NL]; WEINANS ERWIN [NL];) 23 December 2009 (2009-12-23)<br>* page 9, line 7 - page 11, line 1 *<br>* page 12, line 4 - page 12, line 10 *<br>* page 22, line 24 - page 22, line 30 *<br>* page 25, line 11 - page 28, line 10 *<br>* page 31, line 20 - page 32, line 2 *<br>* figures 1A-1C,4 * | 7,15<br><br>1,6,8,9,<br>14 | TECHNICAL FIELDS SEARCHED (IPC)<br><br>G06F<br>H04M |
| A | EP 2 631 767 A2 (SAMSUNG ELECTRONICS CO LTD [KR]) 28 August 2013 (2013-08-28)<br>* paragraph [0007] *<br>* paragraph [0017] - paragraph [0023] *<br>* paragraph [0026] *<br>* paragraph [0029] - paragraph [0032] *<br>* figures 2-6 * | 6,14 | |

-/--

The present search report has been drawn up for all claims

| Place of search | Date of completion of the search | Examiner |
|---|---|---|
| Munich | 9 September 2015 | Fedrigo, Enrico |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons

....................................................................

& : member of the same patent family, corresponding
     document

EPO FORM 1503 03.82 (P04C01)

Europäisches
Patentamt

European
Patent Office

Office européen
des brevets

# EUROPEAN SEARCH REPORT

Application Number

EP 15 30 5386

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2013/127748 A1 (VERTEGAAL ROEL [CA] ET AL) 23 May 2013 (2013-05-23)<br>* paragraph [0108] - paragraph [0109] *<br>* paragraph [0051] - paragraph [0052] *<br>* figures 19-20 *<br>----- | 1,6-9, 14,15 | |

TECHNICAL FIELDS
SEARCHED     (IPC)

The present search report has been drawn up for all claims

| Place of search | Date of completion of the search | Examiner |
|---|---|---|
| Munich | 9 September 2015 | Fedrigo, Enrico |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.........................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 15 30 5386

This annex lists the patent family members relating to the patent documents cited in the above-mentioned European search report.
The members are as contained in the European Patent Office EDP file on
The European Patent Office is in no way liable for these particulars which are merely given for the purpose of information.

09-09-2015

| Patent document cited in search report | | Publication date | Patent family member(s) | | Publication date |
|---|---|---|---|---|---|
| WO 2014108634 | A2 | 17-07-2014 | FR | 3000825 A1 | 11-07-2014 |
| | | | WO | 2014108634 A2 | 17-07-2014 |
| WO 2013188111 | A2 | 19-12-2013 | CN | 104335131 A | 04-02-2015 |
| | | | KR | 20150003380 A | 08-01-2015 |
| | | | TW | 201403393 A | 16-01-2014 |
| | | | US | 2013328792 A1 | 12-12-2013 |
| | | | WO | 2013188111 A2 | 19-12-2013 |
| WO 2009152879 | A1 | 23-12-2009 | AT | 537532 T | 15-12-2011 |
| | | | EP | 2289063 A1 | 02-03-2011 |
| | | | WO | 2009152879 A1 | 23-12-2009 |
| EP 2631767 | A2 | 28-08-2013 | AU | 2013200965 A1 | 12-09-2013 |
| | | | CN | 103294372 A | 11-09-2013 |
| | | | EP | 2631767 A2 | 28-08-2013 |
| | | | JP | 2013175187 A | 05-09-2013 |
| | | | KR | 20130097499 A | 03-09-2013 |
| | | | US | 2013222243 A1 | 29-08-2013 |
| | | | WO | 2013125901 A1 | 29-08-2013 |
| US 2013127748 | A1 | 23-05-2013 | AU | 2010271093 A1 | 08-03-2012 |
| | | | CA | 2767741 A1 | 13-01-2011 |
| | | | CN | 102667662 A | 12-09-2012 |
| | | | EP | 2452247 A2 | 16-05-2012 |
| | | | JP | 2012532804 A | 20-12-2012 |
| | | | KR | 20120093148 A | 22-08-2012 |
| | | | TW | 201118648 A | 01-06-2011 |
| | | | US | 2010045705 A1 | 25-02-2010 |
| | | | US | 2013127748 A1 | 23-05-2013 |
| | | | WO | 2011005318 A2 | 13-01-2011 |

EPO FORM P0459

For more details about this annex : see Official Journal of the European Patent Office, No. 12/82

**EP 3 070 588 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013188111 A2